# EUROPEAN PATENT APPLICATION

(11) **EP 1 106 922 A1**
(43) Date of publication of application: **13.06.2001**
(21) Application number: 00125353.3
(22) Date of filing: 30.11.2000
(51) Int. Cl.: F23K 5/00, F16K 31/08, F16K 31/54, F23N 5/10, F23N 1/00

(54) **Safety and/or flow control valve, particularly for gas**

(30) Priority: 02.12.1999 IT PD990272; 02.12.1999 IT PD990273; 30.12.1999 IT PD990295
(71) Applicant: Gallocchio, Vanni, I-35036 Montegrotto Terme PD (IT)
(72) Inventor: Gallocchio, Vanni, I-35036 Montegrotto Terme PD (IT)
(74) Representative: Modiano, Guido, Dr.-Ing.

(57) **Abstract**

A safety and/or flow control valve (110) particularly for combustible gas-fired heating devices, comprising a hollow body (111) provided with gas passage ducts (112, 119), flow control elements (122a, 122b) for the ducts, at least one translatory actuator (125) for moving the flow control elements, at least one kinematic transmission for connecting the actuator to a permanent magnet (132) arranged within a gas passage region, and means (137) for turning the permanent magnet (132) which are arranged outside the gas passage region.

## Description

The present invention relates to a safety and/or flow control valve particularly for combustible gas-fired heating devices.

Safety valves normally used in these devices are of the solenoid type, in which the solenoid controls the opening of a flow control element which is in the open configuration when current flows and is in the configuration for closing the gas passage ports when there is no current.

For safety reasons, two valves are usually arranged in series, so that if one valve fails the safety function is still provided by the second valve.

The flow control element is rigidly coupled to a permanent electromagnet, which moves due to the variation in the intensity of the magnetic field generated by the solenoid.

Once the valve is activated, high current consumption occurs also entailing heating of the valve, with power dissipations which can be as high as 4-5 W.

The valve is further particularly noisy due to the activation and deactivation of the magnetic field.

As regards flow control valves, there are no constraints such as the interposition of a plurality of valves in series, but this type of valve is nonetheless subject to problems.

Valves with modulation of the flow-rate at the main burner, with analog control on an electromagnet, are usually used.

These valves are constituted by a main body, which contains a solenoid generating a magnetic field which flows inside the main body, and by a fixed core and a movable core which are in turn contained within the solenoid and form a gap.

In practice, energizing the solenoid with a direct current of variable intensity generates a magnetic force at the gap which tends to move the movable core into a position that closes said gap.

A spring is arranged so as to contrast the magnetic force and tends to increase the width of the gap.

The portion of the movable core that is not contained in the solenoid is shaped so as to form a flow control element for a port which allows the flow of the gas inside the valve.

Accordingly, by varying the intensity of the current one controls the movement of the movable core, obstructing to a greater or smaller extent the gas pathway and therefore increasing or reducing its flow-rate.

These valves are nonetheless unable to provide continuous flow control, since they are able to modulate the gas flow only over a small initial movement range but not over the entire possible stroke of the movable core.

Beyond a given open position of the pathway, the gas flow-rate in fact reaches a maximum value which is not subject to further variations owing to any further movement of the flow control element.

Moreover, the presence of the spring entails the occurrence of mechanical hysteresis, which in the long term does not allow precise and adequate flow control even in the narrow range of initial movements.

The aim of the present invention is to provide a safety and/or flow control valve, particularly for gas, which solves the problems of conventional valves.

A consequent object of the present invention is to provide a valve which allows continuous flow control from zero to a preset value according to a preset criterion.

Another object of the present invention is to provide a valve which solves the problem of safety while entailing a low current consumption.

Another object of the present invention is to provide a valve which is quiet.

A further object of the present invention is to provide a valve which provides flow control without being subject to any mechanical hysteresis.

Another object of the present invention is to provide a valve which simultaneously provides the safety and control functions.

Another object of the present invention is to provide a valve whose use entails, as a whole, low electric current consumption.

This aim and these and other objects which will become better apparent hereinafter are achieved by a safety and/or flow control valve particularly for gas, characterized in that it comprises a hollow body provided with gas passage ducts, flow control elements for said ducts, at least one translatory actuator for moving said flow control elements, at least one kinematic transmission for connecting said actuator to a permanent magnet arranged within the gas passage region, and means for turning said permanent magnet which are arranged outside a gas passage region.

Further characteristics and advantages of the present invention will become better apparent from the following detailed description of some embodiments thereof, illustrated only by way of non-limitative example in the accompanying drawings, wherein:
Figure 1 is a sectional view of a safety valve according to the invention in a first embodiment, which solves the problem of safety and also provides flow control;
Figure 2 is a sectional view of a second embodiment of a valve according to the invention;
Figure 3 is a sectional view of a third embodiment of a valve according to the invention;

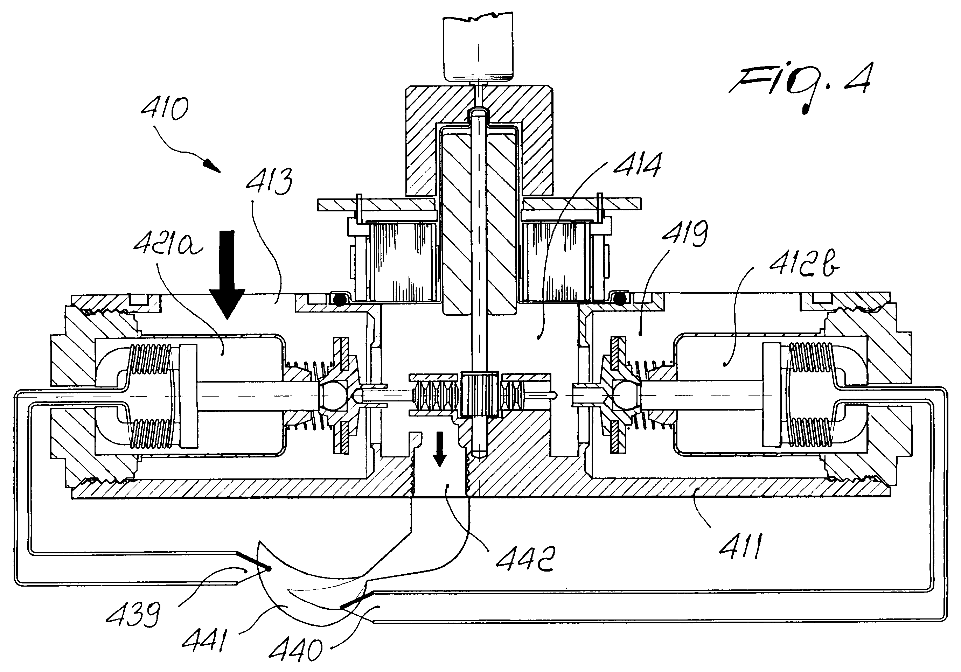

Figure 4 is a sectional view of a valve according to a fourth embodiment of the invention, which provides only the safety function;
Figure 5 is a sectional view of a safety valve according to the invention in a fifth embodiment.

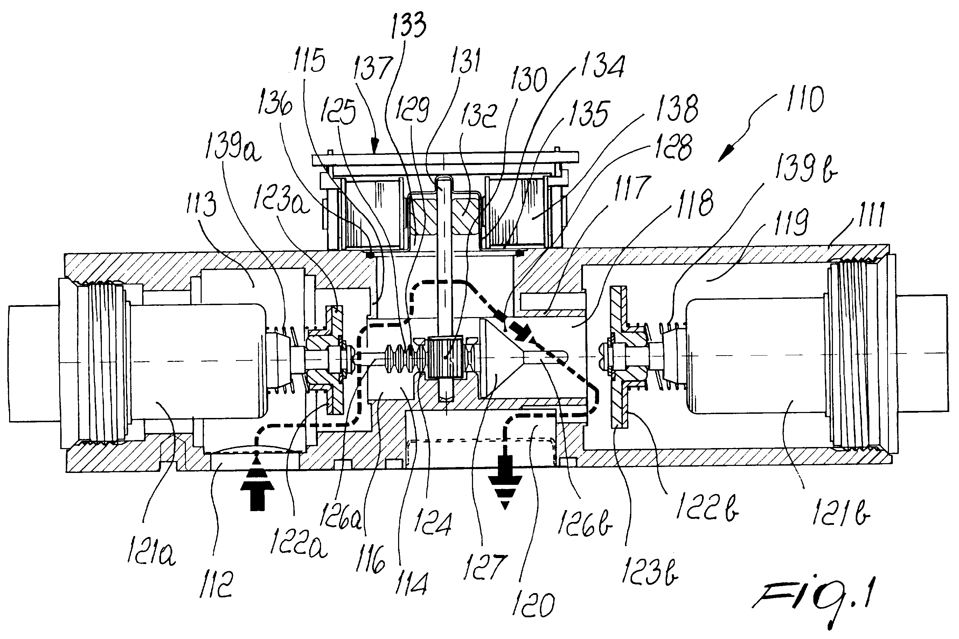

With particular reference to Figure 1, a safety and/or flow control valve particularly for gas, in a first embodiment according to the invention, is generally designated by the reference numeral 110.

The valve 110 is mainly constituted by a hollow body 111, in which ducts are defined for the passage of gas which are constituted by an inlet 112 for an inlet region 113 which is separated from an intermediate region 114 by a first partition 115 provided with a through hole 116.

A gas outlet region 119 is reached from the intermediate region 114 through a second partition 117 provided with a through hole 118 and through an outlet 120.

The inlet region 113, the intermediate region 114 and the outlet region 119 are arranged along the longitudinal direction of the hollow body 111.

Inside the inlet region 113 and the outlet region 119 there are two armature magnets, respectively designated by the reference numerals 121a and 121b and generally designated by the reference numeral 121, which are arranged mutually opposite; each magnet supports, at its end, a corresponding plate 122a and 122b which is provided with a gasket 123a and 123b for forming a seal against the surfaces that face the partitions 115 and 117.

When the magnets are not energized, springs 139a and 139b, which are compressed respectively between the plates 122a and 122b of bodies 140a and 140b of the armature magnets 121, push the plates 122a, 122b against the partitions 115 and 117 so as to obstruct the flow of the gas through the through holes 116 and 118 and therefore through the entire valve 110.

Advantageously, the gaskets 123 provide an excellent seal.

An actuator 125 can slide within a guide 124 in the intermediate region 114.

The actuator 125 is arranged longitudinally and its end portions 126a and 126b can push against the plates 122, contrasting the action of the armature magnets 121.

The actuator 125 has a conical portion 127 adjacent to the end portion 126b that corresponds to the through hole 118.

The actuator 125, by performing a translatory motion, forms between the cone 127 and the hole 118 a passage port 128 which has variable dimensions and allows modulation of the flow-rate of the gas.

The translatory motion of the actuator 125 is allowed by way of the coupling of a complementarily shaped portion 129 thereof with a gear 130 which is keyed on a shaft 131 which is arranged at right angles to the actuator 125 and is in turn keyed to a substantially cylindrical permanent magnet 132.

The permanent magnet 132 is arranged externally with respect to the dimensions of the hollow body 111 by means of an opening 133.

The permanent magnet 132 lies within the gas stream and is therefore isolated from the outside by means of a substantially cylindrical element 134 which contains the permanent magnet 132, which is rigidly coupled to the hollow body 111 by means of its base 135.

A sealing gasket 136 is advantageously arranged between the base 135 and the hollow body 111.

Since the means suitable for rotating the permanent magnet 132 are arranged externally with respect to the cylindrical element 134, the cylindrical element 134 is made of a low-resistivity material so as to avoid the propagation of eddy currents.

Advantageously, in this case, said means for turning the permanent magnet are constituted by a step motor 137 which comprises four coils 138 arranged radially at 90° to each other.

As regards operation, the step motor 137 actuates the rotation of the shaft 131 so that the actuator 125 pushes the plate 122a of the armature magnet 121a which is arranged at the inlet 112.

The motor 137 then turns in the opposite direction, actuating, by means of the actuator 125, the opening of the plate 122b, thus allowing the gas to flow, and being arranged so as to modulate the gas flow-rate by varying the cross-section of the passage port 128.

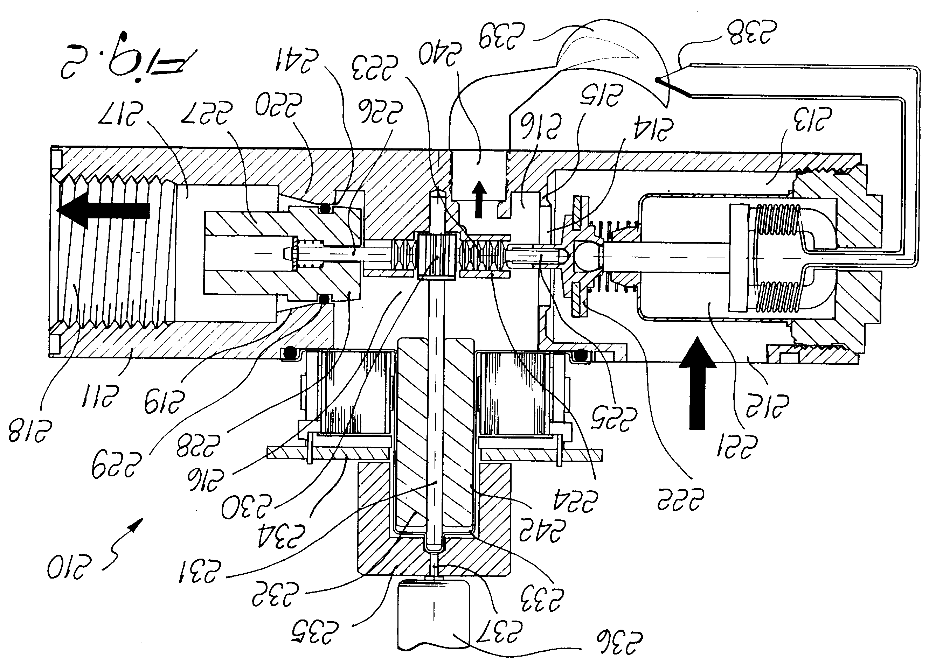

A second embodiment of the invention is shown in Figure 2, wherein the valve is generally designated by the reference numeral 210.

The valve 210 is constituted by a hollow body 211 which is shaped substantially like a parallelepiped and in which an inlet 212 is formed which lies transversely to an inlet region 213 which is connected, by means of a hole 214 of a partition 215, to an intermediate region 216 which is in turn connected to a gas outlet region 217 provided with a longitudinal outlet 218.

The intermediate region 216 and the outlet region 217 are connected through a conical shaped hole 219 formed in the partition 220.

This embodiment 210 uses a single armature magnet 221 which, in the inactive condition, pushes a plate 222 so as to fully obstruct the hole 214 of the partition 215.

In the intermediate region 216 there is an actuator 223 which is again longitudinal and slides within a guide 224.

The end 225 of the actuator 223, at the armature magnet 221, acts by pushing on the plate 222, actuating its opening.

The opposite end 226 instead rigidly supports a flow control element 227 which is substantially cylindrical and has a conical shape in a portion 228, which forms, together with the hole 219, a gas passage port 241 whose cross-section is variable according to the translatory motion of the flow control element 227.

The flow control element 227 further circumferentially supports a sealing gasket 229 which allows complete closure of the hole 219 in the inactive condition.

The translatory motion of the actuator 223 is actuated by a gear 230, which is keyed on a shaft 231, which is in turn keyed on a permanent magnet 232.

The permanent magnet 232 is again arranged externally with respect to the dimensions of the hollow body 211 and is isolated from the outside by means of a hollow cylinder 233, which is made of low-resistivity material.

The permanent magnet 232 can be turned not only by a step motor 234 but also by means of a conducting metallic ring 235 which surrounds the permanent magnet 232 at least along a longitudinal portion 242.

The conducting metallic ring 235 can be turned manually or by means of an electric motor 236, whose shaft 237 is coaxial to the metallic ring 235 and rigidly coupled thereto.

In this embodiment, the safety device is constituted by a thermocouple 238 which by itself allows the opening of the armature magnet 221 if it is actuated by a pilot flame 239 drawn from a transverse port 240 provided in the hollow body 211 at the intermediate region 216.

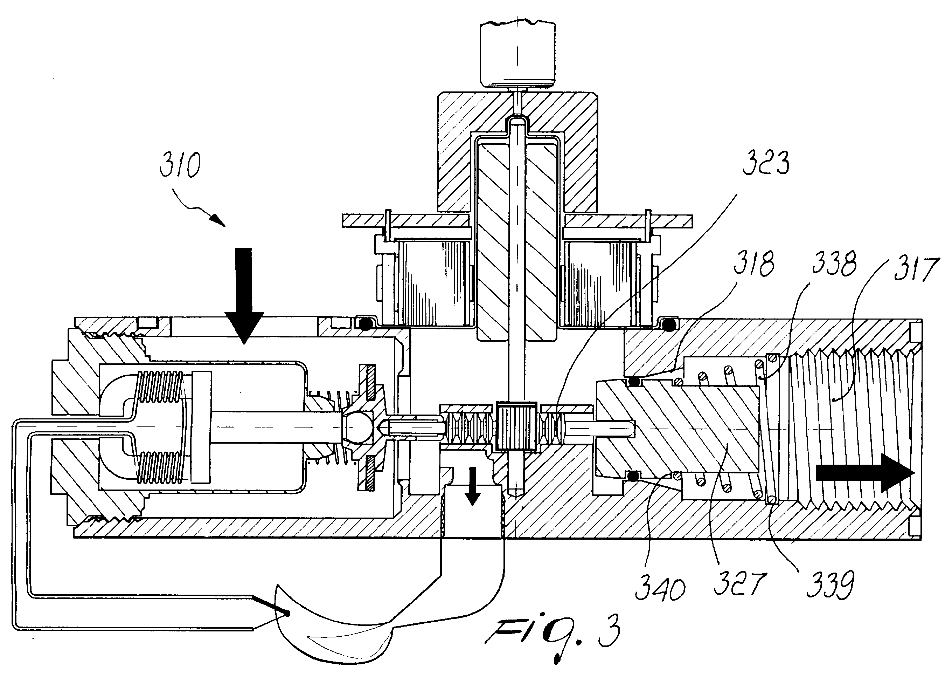

The third embodiment of the invention 310, shown in Figure 3, is substantially similar to the preceding one, except for the different coupling between a flow control element 327 and an actuator 323.

In this case, the actuator 323 in facts acts by pushing on the flow control element 327, contrasting the action of a spring 338 which is arranged in the outlet region 317 and which usually arranges the flow control element 327 in the position for blocking the conical hole 318.

The spring 338 is compressed between a circumferential groove 339 formed in the outlet region 317 and a shoulder 340 formed in the flow control element 327.

The fourth embodiment 410 of the invention differs from the preceding ones in that it provides only the safety functions.

As in the embodiment 110, there are two armature magnets 421a and 421b which are arranged mutually opposite in an inlet region 413 and in an outlet region 419.

Differently, this time the armature magnets 421 are supplied respectively by thermocouples 439 and 440, which are in contact with a pilot flame 441 drawn from a transverse opening 442 provided in a hollow body 411 at an intermediate region 414.

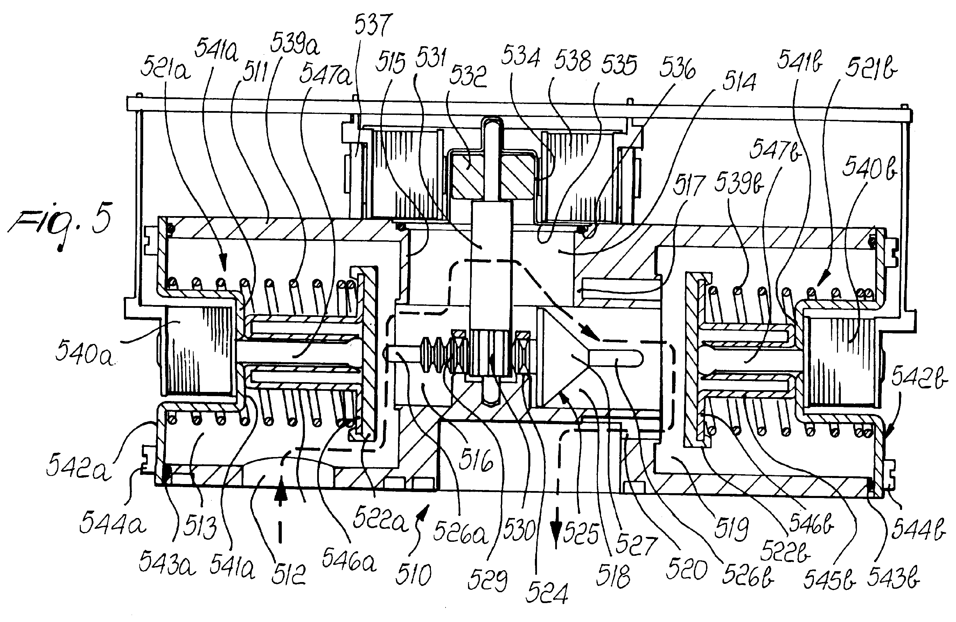

With particular reference now to Figure 5, a safety and flow control valve particularly for gas, according to the invention, is generally designated by the reference numeral 510 in a fifth embodiment.

The valve 510 is mainly constituted by a hollow body 511 in which a gas passage duct is defined which is constituted by an inlet 512 for an inlet region 513 which is separated from an intermediate region 514 by a first partition 515 provided with a through hole 516.

An outlet region 519 for the discharge of the gas through an outlet 520 is reached from the intermediate region 514 through a second partition 517 provided with a through hole 518.

The inlet region 513, the intermediate region 514 and the outlet region 519 are arranged along the longitudinal direction of the hollow body 511.

Inside the inlet region 513 and the outlet region 519 there are two mutually opposite armature electromagnets, designated by the reference numerals 521a and 521b respectively; each electromagnet supports, at its end, a corresponding plate-like safety flow control element 522a and 522b, which is conveniently made of rubber, for providing a seal on the surfaces that face the partitions 515 and 517.

When the electromagnets are not energized, springs 539a and 539b, compressed respectively between the plates 522a and 522b and said armature electromagnets 521a and 521b, push the plates 522a and 522b against the partitions 515 and 517 so as to obstruct the flow of gas through the through holes 516 and 518 and therefore through the entire valve 510.

An actuator 525 can slide in the intermediate region 514 within a guide 524.

The actuator 525 is longitudinally elongated and its end portions 526a and 526b can push against the plates 522a and 522b, contrasting the action of the armature electromagnets 521a and 521b.

The actuator 525, next to the end portion 526b that corresponds to the through hole 518, is shaped so as to form a cone-shaped flow control element 527.

The actuator 525, by performing a translatory motion, forms between the flow control element 527 and the hole 518 a port of variable size which allows to modulate the gas flow-rate.

The translatory motion of the flow control element 525 is allowed by way of the coupling of a complementarily shaped portion 529 thereof with a gear 530 which is keyed to a shaft 531 which is arranged at right angles to the actuator 525 and is in turn keyed on a permanent-magnet rotor 532 which has a substantially cylindrical shape.

The rotor 532 is arranged externally with respect to the dimensions of the hollow body 511.

The rotor 532 lies within the gas stream and is therefore isolated from the outside by means of a substantially cylindrical element 534 which contains the rotor 532 and is rigidly coupled to the hollow body 11 by means of its base 535.

A sealing gasket 536 is advantageously arranged between the base 535 and the hollow body 511.

Since the means adapted to turn the rotor 532 are arranged externally with respect to the cylindrical element 534, the cylindrical element 534 is made of low-resistivity material so as to avoid the propagation of eddy currents.

Advantageously, in this case, said means for turning the permanent magnet are constituted by four coils 538 arranged radially at 90° to each other.

According to the invention, the plate-like safety flow control elements 522a and 522b are respectively rigidly coupled to a stem 547a and 547b of the corresponding armature electromagnet 521a and 521b, whose electrical winding 540a and 540b is contained in a cup-shaped seat 541a and 541b of a metallic cover 542a and 542b which closes a corresponding opening of said hollow body 511 and also closes the magnetic circuit.

Respective sealing rings 543a and 543b and fixing screws 544a and 544b are provided.

The windings 540a and 540b are external with respect to the gas passage region.

Insulating epoxy resin can be introduced in the cup-shaped seats 541a and 541b so as to embed the windings 540a and 540b.

As regards the stems 547a and 547b, they support respective metallic cup-shaped elements 545a and 545b fitted thereon; the cup-shaped elements have respective flanges 546a and 546b, whose edges are surrounded by the edges of the flow control elements 522a and 522b, which are made of elastic material (rubber).

The stems 547a and 547b are enlarged at their respective ends in which the elements 545a and 545b are inserted in order to provide retaining abutments.

The springs 539a and 539b are arranged between the flanges 546a and 546b and the covers 542a and 542b.

The resulting structure allows the flow control elements, when open, to be part, together with the elements 545a and 545b, of the magnetic circuits generated by the windings 540a and 540b.

As regards operation, a step motor 537 actuates the rotation of the shaft 531 so that the actuator 525 pushes the plate-like safety flow control element 522a of the armature electromagnet 521a arranged at the inlet 512.

The rotor 532 then turns in the opposite direction, actuating by means of the actuator 525 the opening of the disk-shaped flow control element 522b, thus allowing the gas stream to flow and be arranged so as to modulate its flow-rate by varying the cross-section of the passage port 528 by means of the cone-shaped flow control element 527.

In practice it has been observed that the intended aim and objects of the present invention have been achieved.

In particular, it should be noted that flow control no longer requires the conventional high-precision mechanism constituted by mutually balanced membranes and springs.

A digital input signal in fact controls the movement of a flow control element which is shaped so as to form, together with a complementarily shaped duct, a passage port whose gas flow-rate varies according to a preset algorithm.

This avoids any hysteresis of the mechanical components.

Moreover, usually in order to reduce the overall dimensions and the electrical power of the solenoids, a pneumatic circuit is usually provided in conventional valves in order to amplify the motion and the force.

The valve according to the invention is much smaller than current valves, since all the elements work in symbiosis, reducing the overall power of the solenoids to 0.1 watts, without having to provide any pneumatic circuit, although the flow control elements retain considerable lifts.

The invention thus conceived is susceptible of numerous modifications and variations, all of which are within the scope of the inventive concept.

All the details may be replaced with other technically equivalent elements.

In practice, the materials employed, so long as they are compatible with the contingent use, as well as the dimensions, may be any according to requirements.

The disclosures in Italian Patent Applications No. PD99A000272, No. PD99A000273 and No. PD99A000295 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A safety and/or flow control valve particularly for gas, characterized in that it comprises a hollow body provided with gas passage ducts, flow control elements for said ducts, at least one translatory actuator for moving said flow control elements, at least one kinematic transmission for connecting said actuator to a permanent magnet arranged within the gas passage region, and means for turning said permanent magnet which are arranged outside a gas passage region.

2. The valve according to claim 1, characterized in that said flow control elements comprise at least one closure plate for a corresponding port formed in a partition which is interposed in said ducts, said plate supporting a sealing gasket on a surface thereof which faces said partition.

3. The valve according to claim 2, characterized in that said plate is rigidly coupled to a stem of an armature magnet which, in an inactive condition, pushes the plate into a position for closing said port.

4. The valve according to claim 1, characterized in that said flow control elements comprise a longitudinally elongated element which is shaped so as to form, with a corresponding shaped portion of said duct, a gas passage port whose value is variable, as a consequence of a movement of the flow control element and according to a preset criterion, from zero to a preset value.

5. The valve according to claim 1, characterized in that said permanent magnet is substantially cylindrical and supports a shaft which is keyed thereto, said shaft being provided for kinematic connection to said actuator, an end that lies opposite to an end for keying to the permanent magnet being inserted in a corresponding dead hole formed at a base of said hollow body.

6. The valve according to claim 5, characterized in that said actuator is a longitudinally elongated element which can slide within a corresponding straight guide which is formed in said hollow body, with head portions for coupling to said flow control elements and a body which is shaped complementarily so as to provide a worm-gear coupling, with a corresponding gear which is keyed on said shaft between said end inserted in the hollow body and the permanent magnet.

7. The valve according to claim 6, characterized in that said actuator is arranged along a direction of longitudinal extension of said body and is perpendicular to said shaft.

8. The valve according to claim 5, characterized in that a portion of said shaft on which said permanent magnet is keyed is arranged externally with respect to dimensions of said hollow body.

9. The valve according to claim 8, characterized in that said permanent magnet is contained within a cylinder made of low-resistivity material whose base is fixed to the hollow body, a sealing gasket being interposed between said base and said hollow body.

10. The valve according to claim 1, characterized in that said means for turning the permanent magnet are constituted by a plurality of coils which are energized alternately or simultaneously and are arranged radially around said cylinder made of low-resistivity material.

11. The valve according to claim 1, characterized in that said means for turning the permanent magnet are constituted by a conducting metallic ring which is arranged above said cylinder made of low-resistivity material.

12. The valve according to claim 11, characterized in that said conducting metallic ring is axially rigidly coupled to the shaft of an electric motor.

13. The valve according to claim 1, characterized in that it comprises a gas inlet, a gas outlet, and two partitions provided with through holes inside the hollow body, which are adapted to form an inlet region, an outlet region and an intermediate region which contains said actuator.

14. The valve according to claim 13, characterized in that said intermediate region is provided with a port for a pilot flame.

15. The valve according to claim 13, characterized in that it comprises two armature magnets, each of which supports a plate-like flow control element for closing corresponding holes formed in said partitions, which are located mutually opposite respectively in the inlet region and in the outlet region of the gas.

16. The valve according to claim 15, characterized in that it comprises a longitudinally elongated flow control element which is rigidly coupled to said actuator between the ends that push on the corresponding plates and is adapted to form a gas passage port having a variable cross-section together with the corresponding hole of the partition that forms the gas outlet region.

17. The valve according to claim 13, characterized in that it comprises an armature magnet which is arranged in the gas inlet region and supports a plate-like flow control element for closing the hole formed in the corresponding partition, and a longitudinally elongated flow control element which is rigidly coupled to the opposite end of the actuator and is adapted to form a gas passage port having a variable cross-section together with the corresponding hole of the partition that forms the gas outlet region.

18. The valve according to claim 17, characterized in that said flow control element is disconnected from said actuator and the actuator pushes the flow control element in contrast with the action of a corresponding spring for positioning the flow control element in the closed condition.

19. The valve according to claim 14, characterized in that it comprises a thermocouple which is connected to said pilot flame for at least one keeper magnet.

20. The safety and flow control valve according to claim 1, characterized in that it comprises a hollow body provided with a gas passage duct, two safety flow control elements for said duct and a flow-rate control element, a translatory actuator for the movement of said safety flow control elements, which are arranged opposite thereto, and of said flow-rate control element, a kinematic transmission for connecting said actuator to a permanent-magnet rotor, which interacts with a plurality of radial actuation coils for opening in succession said safety flow control elements and said flow-rate control element.

21. The valve according to claim 20, characterized in that each one of said safety flow control elements comprises a plate-like safety flow control element for closing a corresponding opening formed in a partition arranged in said duct, said plate-like flow control element supporting a sealing gasket on the surface that faces said partition.

22. The valve according to claim 21, characterized in that said plate is rigidly coupled to a stem of an armature electromagnet which, in the inactive condition, pushes the plate-like flow control element into the position for closing said opening.

23. The valve according to claim 20, characterized in that said flow-rate control element comprises a longitudinally elongated element which is shaped so as to form, together with a corresponding shaped portion of said duct, a gas passage port whose value can vary, as a consequence of the movement of said flow-rate control element and according to a preset criterion, from zero up to a preset value.

24. The valve according to claim 20, characterized in that said actuator is a longitudinally elongated element which can slide within a corresponding straight guide which is formed in said hollow body, with head portions for coupling to said flow control elements and a body which is shaped complementarily so as to provide a worm-gear coupling, with a corresponding gear which is keyed on a shaft from which the motion of said permanent-magnet rotor which interacts with said radial coils is drawn.

25. The valve according to claim 24, characterized in that said actuator is arranged along the longitudinal direction of said body and at right angles to said shaft.

26. The valve according to claim 20, characterized in that it comprises a gas inlet, a gas outlet, and two partitions provided with through holes arranged inside the hollow body, adapted to form an inlet region, an outlet region and an intermediate region which contains said actuator.

27. The valve according to claim 20, characterized in that it comprises two armature electromagnets, each of which supports a plate-like safety flow control element for closing a corresponding hole formed in said partition, said flow control elements being arranged mutually opposite, respectively in the gas inlet region and in the gas outlet region.

28. The valve according to claim 27, characterized in that it comprises a longitudinally elongated flow-rate control element which is rigidly coupled to said actuator between the ends for pushing on the corresponding plates, adapted to form a variable cross-section gas passage port together with the corresponding hole of the partition that defines the gas outlet region.

29. The valve according to claim 28, characterized in that said safety flow control elements are disconnected from said actuator, the actuator pushing the flow control elements in contrast with the action of corresponding springs for positioning them in the closed configuration.

30. The valve according to claim 20, characterized in that said permanent-magnet rotor is internal to the gas passage region and said coils are external.

31. The valve according to claim 20, characterized in that each one of said safety flow control elements is rigidly coupled to a stem of an armature electromagnet whose electrical winding is contained in a seat of a cover which closes a corresponding port of said hollow body, said winding being external with respect to the gas passage region.

32. The valve according to claim 31, characterized in that insulating epoxy resin is introduced in said cup-shaped seats so as to embed the windings.

33. The valve according to claim 31, characterized in that said stems have respective metallic cup-shaped elements fitted thereon, said elements being provided with corresponding flanges whose edges are surrounded by the edges of the flow control elements, which are made of elastic material.

34. The valve according to claim 33, characterized in that said stems are enlarged at their respective ends in which the metallic cup-shaped elements are inserted in order to provide retaining abutments.

35. The valve according to claim 33, characterized in that the springs of said armature electromagnets comprise springs arranged between said flanges of said flow control elements and said covers.
